# EUROPÄISCHE PATENTSCHRIFT

(11) **EP 1 438 625 B1**
(45) Veröffentlichungstag und Bekanntmachung des Hinweises auf die Patenterteilung: **05.12.2007**
(21) Anmeldenummer: 02805276.9
(22) Anmeldetag: 25.10.2002
(51) Int. Cl.: G02B 21/26

(54) **OPTISCHES MIKROSKOP MIT VERSTELLBAREM OBJEKTIV**
OPTICAL MICROSCOPE COMPRISING A DISPLACEABLE OBJECTIVE
MICROSCOPE OPTIQUE A OBJECTIF REGLABLE

(30) Priorität: 25.10.2001 DE 10152609
(43) Veröffentlichungstag der Anmeldung: 21.07.2004
(73) Patentinhaber: MAX-PLANCK-GESELLSCHAFT ZUR FÖRDERUNG DER WISSENSCHAFTEN E.V., 80539 München (DE)
(72) Erfinder: DENK, Winfried, 69120 Heidelberg (DE)
(74) Vertreter: Hertz, Oliver
(86) Internationale Anmeldenummer: PCT/EP2002/011937
(87) Internationale Veröffentlichungsnummer: WO 2003/054610

(56) Entgegenhaltungen:
- WO-A-01/15193
- US-A- 4 604 520
- US-A- 4 744 642
- US-A- 5 552 928
- US-A- 5 640 270
- US-A- 5 818 637
- US-B1- 6 172 804

## Beschreibung

Die Erfindung betrifft eine Abbildungseinrichtung zur optisch-mikroskopischen Abbildung eines Objekts, insbesondere ein optisches Mikroskop mit einem verstellbaren Objektiv, und ein Verfahren zur optischen Mikroskopie.

In der optischen Mikroskopie ist es typischerweise notwendig, die Position eines Objekts (Probe) relativ zum Mikroskop und insbesondere relativ zum Objektiv des Mikroskops einzustellen und ggf. während der mikroskopischen Abbildung oder Beobachtung oder zwischen verschiedenen Abbildungs- oder Beobachtungsschritten in vorbestimmter Weise zu verändern. Die gegenseitige Anordnung (Relativposition) muss in allen drei Raumrichtungen einstellbar sein. Bei manchen Anwendungen besteht die zusätzliche Forderung nach Variation des Beobachtungswinkels, d. h. des Winkels zwischen der optischen Achse des Objektivs und z. B. der Oberflächennormale des Objekts.

Bisher ist es üblich, zur Einstellung der Relativposition einen Verstelltisch mit einem Antrieb für alle drei Raumrichtungen zu verwenden. Das Objekt wird auf dem Verstelltisch angeordnet und relativ zum ortsfesten Mikroskop positioniert. Bei vielen Anwendungen ist es jedoch unerwünscht oder sogar unmöglich, das Objekt relativ zum Mikroskop zu bewegen. Beispiele hierfür sind die Beobachtung schwerer oder aus anderem Grund unbeweglicher Objekte oder die Kombination der mikroskopischen Abbildung mit anderen Mess- oder Manipulationsverfahren, wie bspw. die Ableitung elektrischer Potentiale in der Neurophysiologie.

Die relative Positionierung von einem Objekt und dem Mikroskop ist bei einem ortsfesten Objekt grundsätzlich auch durch eine Bewegung des gesamten Mikroskopaufbaus möglich. Dieses Verfahren ist aber aus den folgenden Gründen auf wenige, spezielle Anwendungsfälle beschränkt. Erstens besitzen Mikroskope typischerweise ein hohes Gewicht, so dass nicht jede Ausrichtung im Raum ohne Weiteres erzielbar ist. Des Weiteren besteht häufig die Notwendigkeit zur Ausrichtung des Mikroskops relativ zu weiteren, stationären Geräten, wie z. B. Lasern. Aus den genannten Gründen sind bisher insbesondere aufwendige Mikroskopverfahren, wie z. B. die Konfokal- oder die Multiquanten-Mikroskopie an ortsfesten oder stationären Objekten nicht oder nur beschränkt ausführbar.

Es sind Mikroskope bekannt, bei denen zur Fokussierung, d. h. zur Einstellung des Objektivs auf eine Fokusebene im Objekt, das Objektiv relativ zum übrigen Aufbau des Mikroskops verschoben wird. Diese Fokussierungsbewegung entlang der optischen Achse des Objektivs basiert auf dem folgenden Merkmal der meisten modernen Mikroskope. Typischerweise ist ein Mikroskopobjektiv nämlich für einen unendlichen Bildabstand ausgelegt. Dies bedeutet, dass der abgebildete Teilbereich des Objekts auf Unendlich abgebildet wird. Ein Zwischenbild des Objekts, das mit einem Okular beobachtet werden kann, wird mit einer sog. Tubuslinse erzeugt. Ein Vorteil dieses Aufbaus besteht insbesondere darin, dass zur Fokussierung der Abstand zwischen dem Objektiv und der Tubuslinse in bestimmten Grenzen variiert werden kann, ohne dass die beugungsbegrenzten Abbildungseigenschaften des gesamten optischen Systems beeinträchtigt werden. Die herkömmliche Fokussierungsbewegung des Objektivs ist jedoch auf axiale Verschiebungen beschränkt. Eine freie Einstellung der Relativposition zwischen Objekt und Mikroskop in allen Raumrichtungen ist damit nicht möglich.

In US 4 744 642 wird ein Mikroskop beschrieben, bei dem, um einen großen Beobachtungsbereich zu erhalten, ohne ein großes Objektiv zu erfordern, das optische Objektivsystem so gebildet ist, dass es parallel zu einer Probenoberfläche beweglich ist, wobei die Lichtweglänge zwischen dem optischen Objektivsystem und dem Okular durch eine Bewegung des optischen Objektivsystems variabel ist. In US 5 818 637 wird ein Mikroskop beschrieben, bei dem eine Vielzahl von Objektiven auf einer Trommel angeordnet sind, die relativ zum Lichtweg des Mikroskops gedreht werden kann.

Die Aufgabe der Erfindung ist es, eine verbesserte Abbildungseinrichtung zur mikroskopischen Abbildung eines Objekts bereitzustellen, mit der die Nachteile herkömmlicher Mikroskope überwunden werden und die insbesondere eine freie Einstellung der Relativkoordinaten zwischen dem Objektiv und dem Objekt ohne Einschränkung der Abbildungseigenschaften der Abbildungseinrichtung ermöglicht. Die Aufgabe der Erfindung ist es auch, ein verbessertes Abbildungsverfahren zur optischen Mikroskopie bereitzustellen, mit dem an stationären Objekten eine freie Auswahl des abgebildeten Objektbereiches möglich ist.

Diese Aufgaben werden mit einer Abbildungseinrichtung, einem Mikroskop und einem Verfahren mit den Merkmalen gemäß den Patentansprüchen 1, 10 und 11 gelöst. Vorteilhafte Ausführungsformen und Anwendungen der Erfindung ergeben sich aus den abhängigen Ansprüchen.

Mit der Erfindung wird, eine Abbildungseinrichtung zur mikroskopischen Abbildung eines Objekts mit einem Objektiv und einer Tubusoptik weitergebildet, bei der das Objektiv relativ zur Tubusoptik in mindestens einer, von der Richtung der optischen Achse des Objektivs abweichenden Richtung beweglich angeordnet ist und eine Umlenkeinrichtung zur senkrechten und axial zentrierten Ausrichtung des Strahlenganges vom Objektiv auf die Tubusoptik und eine Verstelleinrichtung zur Positionierung des Objektivs und zur Einstellung der Umlenkeinrichtung vorgesehen sind. Die Umlenk- und Verstelleinrichtungen werden so betrieben, dass die optische Achse des Objektivs und die mit der Umlenkeinrichtung umgelenkte optische Achse der Tubusoptik zusammenfallen. Mit einem Objektiv, das zur Erzeugung des Objektbildes im Unendlichen eingerichtet ist, besitzt diese Abbildungseinrichtung die Eigenschaft, dass das Objektiv Relativbewegungen zur Tubusoptik und somit zum stationären Mikroskopaufbau ausführen kann, ohne dass die Erzeugung eines Zwischenbildes beeinträchtigt wird. Es ist insbesondere möglich, mit dem Objektiv Translations- und/oder Schwenkbewegungen auszuführen. Die Beweglichkeit des Objektivs bedeutet, dass die Position des Objektivs und/oder die Ausrichtung seiner optischen Achse zwischen verschiedenen Betriebszuständen veränderlich und im jeweils neuen Zustand fixiert einstellbar ist.

Mit der Umlenkeinrichtung, die erfindungsgemäß drei verstellbare Reflektoren aufweist, und der Verstelleinrichtung werden Verschiebungen des Strahlengangs vom Objektiv zur Tubusoptik so kompensiert, dass der Strahlengang mit dem auf unendlich abgebildeten Objektbild immer so auf die Tubusoptik fällt, wie es bei herkömmlichen Mikroskopen mit axial ausgerichteten Optiken der Fall ist. Die Translationsbewegung bedeutet, dass das Objektiv in den zwei Raumrichtungen senkrecht zur optischen Achse des Objektivs beweglich ist. Die Schwenkbewegung bedeutet, dass das Objektiv um eine Achse, die senkrecht auf der optischen Achse des Objektivs steht, verschwenkbar ist. Damit können beliebige Positionen und Beobachtungswinkel relativ zum Objekt eingenommen werden. Dies ermöglicht vielfältige mikroskopische Abbildungen, insbesondere an ortsfesten oder stationären Objekten.

Gemäß der Erfindung ist die Umlenkeinrichtung insbesondere mit einem verstellbaren Tubus-Reflektor ausgestattet, der entlang der optischen Achse der Tubusoptik verschiebbar ist. In diesem Fall enthält die Verstelleinrichtung insbesondere einen X-Antrieb, mit dem das Objektiv und der Tubus-Reflektor gemeinsam entlang der optischen Achse der Tubusoptik verschiebbar sind. Bei Verschiebung des Objektivs mit dem Tubus-Reflektor in Richtung der optischen Achse der Tubusoptik kann das Objektiv über dem Objekt verfahren werden. Dieser Vorgang erfolgt zunächst in einer festgelegten Richtung, was für zahlreiche Anwendungen, insbesondere in der Materialprüfung, bereits ausreichend ist. Vorteilhafterweise wird während des Verfahrens des Objektivs mit dem Tubus-Reflektor trotz der Änderung des Abstandes zwischen Objektiv und Tubusoptik eine Verschlechterung der Abbildung vermieden.

Gemäß der Erfindung umfasst die Umlenkeinrichtung des Weiteren einen sog. Objektiv-Reflektor, wobei die Verstelleinrichtung einen Y-Antrieb aufweist, mit dem das Objektiv und der Objektiv-Reflektor gemeinsam entlang einer Bezugsrichtung senkrecht zur optischen Achse der Tubusoptik verschiebbar sind. Bei Kombination mit dem genannten X-Antrieb werden Translationen des Objektivs in beiden orthogonalen Richtungen senkrecht auf der optischen Achse des Objektivs ermöglicht. Damit wird der Verfahrbereich des Objektivs über dem Objekt erweitert. Vollständige Oberflächen des Objekts sind der mikroskopischen Abbildung zugänglich.

Vorteilhafterweise ist die Verstelleinrichtung mit einem translatorischen Z-Antrieb ausgestattet, mit dem das Objektiv entlang seiner optischen Achse verschiebbar und an einer bestimmten Position einstellbar ist. Dies ermöglicht die Fokussierung des optischen Systems der erfindungsgemäßen Abbildungseinrichtung auf die jeweils gewünschte Fokusebene im Objekt, was insbesondere bei der Konfokalmikroskopie von besonderem Vorteil ist.

Gemäß der Erfindung ist die Umlenkeinrichtung auch mit einem Zwischen-Reflektor ausgestattet, wobei die Objektiv- und Zwischenreflektoren gemeinsam so verschiebbar und einstellbar sind, dass bei Verschiebung des Tubusreflektors und/oder des Objektivreflektors mit dem Objektiv die Länge des Strahlengangs vom Objektiv zur Tubusoptik konstant bleibt. Durch diese Maßnahme kann vorteilhafterweise die Verschiebung des Bildes der Objektivaustrittspupille, z.B. auf den Scanspiegeln, vollständig vermieden werden.

Gemäß weiteren Ausführungsformen der Erfindung kann ein Verschwenken des Objektivs mit dem Objektiv-Reflektor um mindestens eine Achse senkrecht zur optischen Achse des Objektivs vorgesehen sein. Das Verschwenken des Objektivs erfolgt mit mindestens einem Schwenkantrieb. Es ermöglicht in vorteilhafter Weise die Einstellung vorbestimmter Beobachtungswinkel vom Objektiv relativ zum Objekt oder definiert ausgerichteter Fokusebenen im Objekt.

Die translatorischen Antriebe und der Schwenkantrieb können grundsätzlich unabhängig voneinander betätigt und justiert werden. Erfindungsgemäß wird jedoch ein Synchronbetrieb aller Antriebe bevorzugt. Beim Synchronbetrieb werden alle Komponenten, die in einer bestimmten Richtung verstellt werden, gleichzeitig und mit einem gemeinsamen Antrieb bewegt.

Ein Gegenstand der Erfindung sind auch ein Mikroskop, das mit der beschriebenen Abbildungseinrichtung ausgestattet ist, und ein Abbildungsverfahren unter Verwendung der beschriebenen Abbildungseinrichtung, bei dem das Objektiv Translations- und/oder Schwenkbewegungen unterzogen wird und eine Kompensation der dabei auftretenden Änderungen des Strahlengangs zur Tubusoptik unter Verwendung der Umlenkeinrichtung und der Verstelleinrichtung erfolgt.

Die Erfindung besitzt die folgenden Vorteile. Die erfindungsgemäße Abbildungseinrichtung ist bei allen Mikroskoptypen oder Mikroskopieverfahren, die an sich bekannt sind, verwendbar. Es bestehen keine Beschränkungen in Bezug auf die Art der zu untersuchenden Proben, die optischen Parameter des Abbildungssystems, die Art der Bildaufnahme oder dergleichen. Die erfindungsgemäße Abbildungseinrichtung ermöglicht eine Bewegung des Objektiv über einen großen Verfahr- und/oder Schwenkbereich. Die Bewegung kann überraschenderweise ohne Kippbewegungen erfolgen, die die Fokussierung stören würden. Dies ermöglicht erstens, dass relativ große, ortsfeste Objekte (charakteristische Dimensionen im cm-Bereich) untersucht werden können. Zweitens kann durch die Beweglichkeit des Objektivs ein Arbeitsraum bereitgestellt werden, um ggf. das Objekt zusätzlichen Untersuchungen oder Bearbeitungen zu unterziehen. Bei einer Translationsbewegung des Objektivs in einer Ebene senkrecht zur optischen Achse des Objektivs bleibt die Fokussierung vorteilhafterweise konstant. Das Objekt kann in einer gleichbleibenden Fokusebene abgebildet und/oder bearbeitet werden. Die erfindungsgemäß verwendete Umlenkeinrichtung besitzt eine große Variabilität. Wenn mehrere Reflektoren vorgesehen sind, können verschiedene Faltungen des Strahlengangs vom Objektiv zu Tubusoptik vorgesehen sein, deren Geometrie ohne weiteres an die jeweils gegebenen Bedingungen am Messaufbau angepasst sind.

Weitere Vorteile und Einzelheiten der Erfindung ergeben sich aus der Beschreibung der beigefügten Zeichnungen. Es zeigen:
- Figuren 1 und 2:: schematische Illustrationen des Strahlengangs vom Objektiv zur Tubusoptik unter Verwendung von zwei Reflektoren (keine Ausführungsform der Erfindung),
- Figuren 3 bis 5:: schematische Illustrationen des Strahlengangs vom Objektiv zur Tubusoptik bei verschiedenen Ausführungsformen erfindungsgemäßer Abbildungseinrichtungen,
- Figuren 6 und 7:: Illustrationen eines Aufbaus mit einem verschwenkbaren Objektiv (in der illustrierten Form mit zwei Reflektoren keine Ausführungsform der Erfindung),
- Figur 8:: eine schematische Illustration der vorgesehenen X-, Y- und Z-Antriebe, (in der illustrierten Form mit zwei Reflektoren, keine Ausführung der Erfindung)
- Figuren 9, 10:: weitere schematische Darstellungen des optischen Systems gemäß Figur 2 (keine Ausführung der Erfindung), und
- Figur 11:: eine schematische Darstellung eines mit einer erfindungsgemäßen Abbildungseinrichtung ausgestatteten Mikroskops.

Die erfindungsgemäße Abbildungseinrichtung ist vorzugsweise zur optisch-mikroskopischen Abbildung eines Objekts und somit zur Verwendung in oder mit einem Mikroskop vorgesehen. In Bezug auf die Kombination mit bestimmten Mikroskopbauformen bestehen keine Beschränkungen. Im Folgenden wird daher vorrangig auf die Gestaltung des Strahlengangs zwischen dem Objektiv und der Tubusoptik einer erfindungsgemäßen Abbildungseinrichtung eingegangen. Es wird ferner betont, dass die Umsetzung der Erfindung nicht auf die im Folgenden erläuterte Ausführungsform mit drei Reflektoren im Strahlengang einer erfindungsgemäß verwendeten Umlenkeinrichtung beschränkt ist. Bei bestimmten Anwendungsfällen können weitere Faltungen des Strahlenganges in weitere Raumrichtungen und/oder mit weiteren Reflektoren vorgesehen sein. Des Weiteren können bei der konkreten Umsetzung der Erfindung abweichend von den schematischen Darstellungen die Längen der Teilstücke des Strahlengangs in veränderten Verhältnissen bereitgestellt werden.

Ein Merkmal der Abbildungseinrichtung besteht darin, dass das Objektiv der Abbildungseinrichtung relativ zur Tubusoptik in mindestens einer Richtung abweichend von der Richtung der optischen Achse des Objektivs beweglich angeordnet ist. Der Strahlengang vom Objektiv zur Tubusoptik verläuft über drei Reflektoren einer Umlenkeinrichtung. Die Bewegung des Objektivs mit den Reflektoren erfolgt bei Translationsbewegungen immer entlang der optischen Achse in einem Teilstück des Strahlengangs.

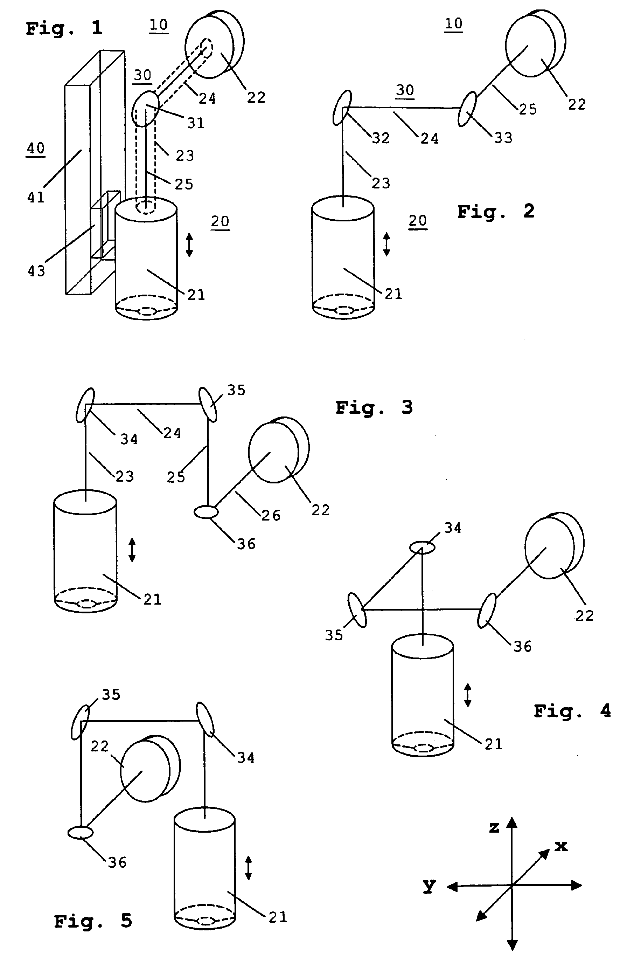

Die verschiedenen Bewegungsmöglichkeiten der Abbildungseinrichtung sind in den Figuren 1 bis 10 relativ zu dem gezeigten rechtwinkligen Koordinatensystem illustriert. Bei diesem liegen die Y-Richtung als horizontale Richtung und die Z-Richtung als vertikale Richtung in der Zeichenebene der Figuren, während die X-Richtung zu den Y- und Z-Richtungen senkrecht verläuft. Im Folgenden wird davon ausgegangen, dass die Tubusoptik jeweils unbeweglich oder stationär mit dem jeweiligen Mikroskopaufbau angeordnet ist. Die optische Achse der Tubusoptik verläuft in den Figuren 1 bis 8 in X-Richtung. Die Reflektoren und das Objektiv können Translations- und/oder Schwenkbewegungen ausführen, die in verschiedene Raumrichtungen gerichtet sein können.

Allgemein wird der Strahlengang vom Objektiv zur Tubusoptik mit einem ersten Reflektor mindestens einmal umgelenkt. Es werden vier Teilstücke gebildet. Die Umlenkung erfolgt an jedem Reflektor um einen festen Winkel, z. B. 90°. Alle Teilstücke des Strahlenganges verlaufen zur Realisierung von Translationsbewegungen entlang einer der X-, Y- oder Z-Richtungen. Für Schwenkbewegungen ist das Koordinatensystem zusätzlich um die X- und/oder Y-Achsen verdrehbar.

Die Reflektoren sind ebene Reflektoren. Sie umfassen vorzugsweise ebene Spiegel. Es werden bspw. dielektrische Multischichtspiegel vom Typ LSBM-NIR (erhältlich von LINOS photonics) verwendet. Alternativ könnten als Reflektoren auch Prismenreflektoren vorgesehen sein. Jeder Reflektor ist jeweils so ausgerichtet, dass die Oberflächennormale der Spiegelfläche einen Winkel von z. B. 45° zu den benachbarten Teilstücken des Strahlengangs bildet. Diese Ausrichtung ist fixiert, falls nur Translationsbewegungen des Objektivs vorgesehen sind. Für Schwenkbewegungen des Objektivs ist zusätzlich eine Verschwenkbarkeit einzelner Reflektoren vorgesehen.

Figur 1 zeigt eine Abbildungseinrichtung (keine Ausführungsform der Erfindung), bei der das Objektiv relativ zu einem (nicht dargestellten) Objekt in X-Richtung beweglich ist. Zusätzlich ist eine Bewegung in Z-Richtung vorgesehen (siehe Doppelpfeil), die der Fokussierung dient. Die Fokussierung in Z-Richtung ist an sich bekannt und wird daher bei dieser und den folgenden erläuterten Ausführungsformen nicht weiter beschrieben.

Die Abbildungseinrichtung 10 gemäß Figur 1 umfasst eine Abbildungsoptik 20 mit einem Objektiv 21 und einer Tubusoptik 22, eine Umlenkeinrichtung 30, die bei dieser Ausführungsform lediglich einen Reflektor 31 aufweist, und eine Verstelleinrichtung 40, die bei der dargestellten Ausführungsform lediglich einen X-Antrieb 41 und einen Z-Antrieb 43 umfasst.

Als Objektiv 21 kann jedes an sich bekannte Mikroskopobjektiv verwendet werden, dessen optischen Parameter an die jeweilige Abbildungs-, Mess- oder Bearbeitungsaufgabe angepasst sind. Das Objektiv 21 entwirft vom Objekt ein Bild im Unendlichen.

Es wird ein paralleler Strahlengang erzeugt, der über den Reflektor 31 auf die Tubusoptik 22 gerichtet ist. Die Tubusoptik 22 dient der Erzeugung eines Zwischenbildes des Objekts und der Erzeugung einer Abbildung der Eintrittspupille des Objektivs 21. Je nach Mikroskoptyp wird das von der Tubusoptik 22 erzeugte Zwischenbild visuell betrachtet und/oder mit einem Detektor (z. B. CCD-Detektor) erfasst, oder am Ort der Abbildung der Eintrittspupille des Objektivs 21 befindet sich ein Scannerspiegel (Abtastspiegel, Schwingspiegel) für die Scanning-Mikroskopie. Die Tubusoptik 22 kann wie beim herkömmlichen Mikroskop durch eine Tubuslinse oder alternativ durch einen Aufbau aus mehreren Linsen gebildet werden. Die Tubusoptik 22 ist bspw. vom Typ Nikon MXA22018 Allgemein können die Teile der Abbildungsoptik 20 auch durch Spiegeloptiken anstelle der Linsenoptiken gebildet werden.

Mit dem Reflektor 31 wird der parallele Strahlengang vom Objektiv 21 zur Tubusoptik 22 in zwei Teilstücke 23, 24 unterteilt. In Figur 1 ist die optische Achse 25 des Strahlengangs durchgezogen und die äußere Umrandung gestrichelt eingezeichnet. Aus Übersichtlichkeitgründen ist bei den übrigen Figuren jeweils nur die optische Achse entlang des Strahlengangs eingezeichnet.

Das Objektiv 21 ist vertikal in Z-Richtung ausgerichtet. Dementsprechend verläuft das erste Teilstück 23 des Strahlenganges vom Objektiv 21 zum Reflektor 31 vertikal in Z-Richtung. Der Reflektor 31 ist um 45° gegenüber der Z-Richtung hin zur X-Richtung geneigt angeordnet, so dass das zweite Teilstück 24 hin zur Tubusoptik 22 entlang von deren optischen Achse in X-Richtung verläuft.

Die Verstelleinrichtung 40 umfasst bei der dargestellten Ausführungsform einen X-Antrieb 41 und einen Z-Antrieb 43. Erfindungsgemäß wirken diese Antriebe mit der Umlenkeinrichtung 30 in der im Folgenden erläuterten Weise zusammen.

Das Objektiv 21 ist in einer von seiner optischen Achse abweichenden Richtung beweglich angeordnet. In Figur 1 ist diese Bewegungsrichtung die X-Richtung. Zur Ausrichtung des Strahlengangs auf die Tubusoptik ist der Reflektor 31 der Umlenkeinrichtung entsprechend ebenfalls in der X-Richtung verschiebbar. Die Bewegung und Fixierung an einer vorbestimmten Position wird mit der erfindungsgemäß verwendeten Verstelleinrichtung durchgeführt. Allgemein kann eine getrennte Verstellung des Reflektors 31 und des Objektivs 21 mit nachträglicher Neujustierung vorgenommen werden. Bevorzugt wird jedoch eine synchrone Verstellung mit dem gemeinsamen X-Antrieb 41, an dem sowohl der Reflektor 31 als auch das Objektiv 21 angebracht sind. Der X-Antrieb ist bspw. ein Translations-Verstelltisch, wie er an sich bekannt ist. Der X-Antrieb 41 besitzt bspw. einen Verstellbereich von 25mm. Die Anbringung des Objektivs 21 am X-Antrieb 41 erfolgt über den Z-Antrieb 43, mit dem das Objektiv 21 in jeder Position in Z-Richtung fokussiert werden kann. Alternativ kann das Objektiv 21 auch direkt am X-Antrieb 41 befestigt sein, wobei dann zur Fokussierung der gesamte Aufbau aus Abbildungsoptik 20 und Umlenkeinrichtung 30 in Z-Richtung verschiebbar angebracht sein müsste.

Zur mikroskopischen Abbildung eines Objekts wird das Objektiv 21 auf die interessierende Fokusebene des Objekts fokussiert. Um verschiedene Teilbereiche des Objekts abzubilden, kann das Objektiv 21 gemeinsam mit dem Reflektor 31 in X-Richtung verfahren werden, ohne dass die optische Abbildung mit der Tubuslinse 22 eingeschränkt wird.

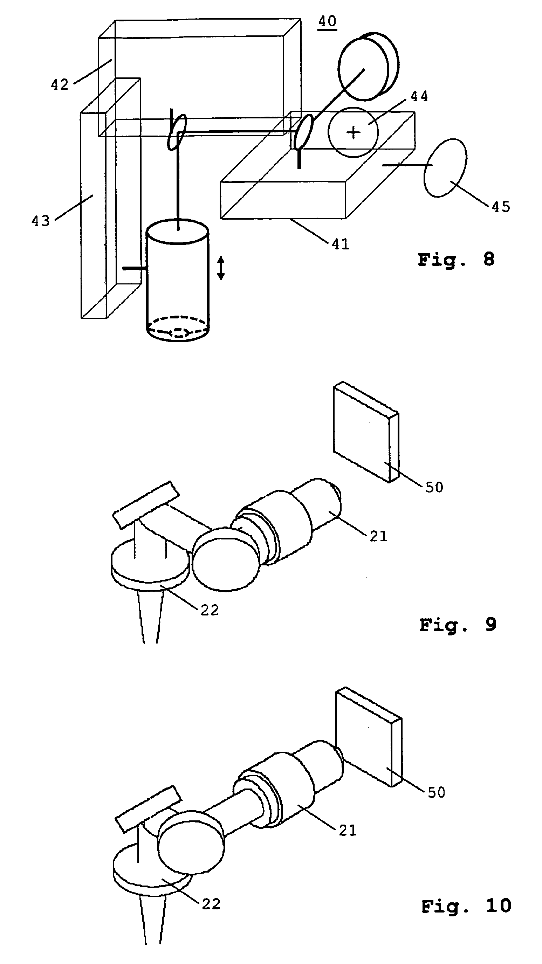

Eine Erweiterung auf zwei Translationsrichtungen, nämlich die X- und Y-Richtungen, ist in Figur 2 illustriert (keine Ausführungsform der Erfindung). Aus Übersichtlichkeitsgründen ist die Verstelleinrichtung 40 in Figur 2 nicht dargestellt. Weitere Einzelheiten der Verstelleinrichtung 40 werden unten unter Bezug auf Figur 8 beschrieben. Die Abbildungseinrichtung 10 gemäß Figur 2 umfasst wieder die Abbildungsoptik 20 mit dem Objektiv 21 und der Tubusoptik 22 und eine Umlenkeinrichtung 30, die in diesem Fall zwei Reflektoren aufweist. Die Reflektoren werden als Objektiv-Reflektor 32 und als Tubus-Reflektor 33 bezeichnet. Der Strahlengang vom Objektiv 21 zur Tubusoptik 22 wird durch die Objektiv- und Tubusreflektoren 32, 33 in drei Teilstücke 23, 24 und 25 unterteilt. Die optische Achse des Teilstücks 23 fällt mit der optischen Achse des Objektivs 21 zusammen. Die optische Achse des Teilstücks 25 fällt mit der optischen Achse der Tubusoptik 22 zusammen. Das mittlere Teilstück 24 verläuft in Y-Richtung senkrecht zu den beiden anderen Teilstücken. Die Reflektoren 31, 32 sind entsprechend unter Bildung von 45°-Winkeln der jeweiligen Oberflächennormalen relativ zu den angrenzenden Teilstücken ausgerichtet.

Die Umlenk- und Verstelleinrichtungen wirken zur Erzeugung von Translationsbewegungen des Objektivs 21 in X- und/oder Y-Richtungen wie folgt zusammen. Bei der folgenden Erläuterung wird auch auf die unten angegebene Tabelle Bezug genommen, in der die Freiheitsgrade der einzelnen Komponenten der erfindungsgemäßen Abbildungseinrichtung eingetragen sind. Zur Einstellung des Strahlengangs auf die Tubusoptik 22 bei einer X-Translation des Objektivs 21 ist der Tubus-Reflektor 33 in X-Richtung verschiebbar. In Y- und Z-Richtungen ist keine Verstellbarkeit des Tubus-Reflektors 33 vorgesehen, um die Ausrichtung zur ortsfesten Tubusoptik 22 zu erhalten. Die Verstellung des Tubus-Reflektors 33 erfolgt analog zur Verstellung des Reflektors 31 in Figur 1.

Zur Einstellung des Strahlenganges auf den Tubus-Reflektor 33 und damit auf die Tubusoptik 22 bei Translation des Objektivs 21 in Y-Richtung ist der Objektiv-Reflektor 33 in Y-Richtung verschiebbar. Diese Verschiebung entlang der optischen Achse des Strahlenganges im Teilstück 24 erfolgt analog zu den genannten Verschiebungen in X-Richtung. Entsprechend dem funktionellen Zusammenwirken besitzen die in Figur 2 dargestellten Komponenten die folgenden Freiheitsgrade. Das Objektiv 21 ist in allen drei Raumrichtungen verschiebbar. Der Objektiv-Reflektor 32 besitzt Freiheitsgrade zur Verschiebung in X- und Y-Richtung. Der Tubus-Reflektor 33 ist ausschließlich in X-Richtung verschiebbar (siehe Tabelle). Bevorzugt erfolgt ein Synchronbetrieb von Antrieben mit einer Verstelleinrichtung, die beispielhaft in Figur 8 gezeigt ist.

Durch gemeinsames Verschieben des Objektivs 21 mit dem Objektiv-Reflektor 32 und dem Tubus-Reflektor 33 um gleiche Wegstrecken in X-Richtung wird das Objektiv 21 entsprechend unter Aufrechterhaltung der optischen Abbildung in X-Richtung über das Objekt gefahren. Die Translation in Y-Richtung ergibt sich durch gemeinsames Verschieben des Objektivs 21 und des Objektiv-Reflektors 32 um gleiche Wegstrecken in Y-Richtung. Der Verfahr-Weg in X- und Y-Richtungen beträgt jeweils bis zu bspw. 25 mm.

Bei den Figuren 1 und 2 wird die Gesamtlänge des Strahlengangs vom Objektiv 21 zur Tubusoptik 22 bei Verschiebung des Objektivs 21 verändert. Beispielsweise verkürzt sich der Strahlengang durch Verkürzung des Teilstücks 25 bei Verschiebung des Objekts 21 in X-Richtung hin zur Tubusoptik 22. In umgekehrter Richtung vergrößert sich die Länge des Teilstücks 25. Diese Veränderungen sind je nach Anwendungsfall erheblich größer als die Verstellungen in Z-Richtung zur Fokussierung des Objektivs 21. Obwohl das Objektiv 21 grundsätzlich für einen parallelen Strahlengang ausgelegt ist, sind Veränderungen des Abstandes zwischen Objektiv 21 und Tubusoptik 22 nur innerhalb bestimmter Grenzen tolerierbar, da z.B. sich die Lage des Pupillenbildes entlang der optischen Achse verschiebt, was in konfokalen Mikroskopen von Nachteil sein kann. Um diesem Problem zu begegnen, ist erfindungsgemäß eine Umlenkeinrichtung vorgesehen, mit der die Gesamtlänge des Strahlenganges konstant gehalten wird. Dies ist in den Figuren 3 bis 5 illustriert.

Die erfindungsgemäß verwendete Umlenkeinrichtung umfasst gemäß Figur 3 drei Reflektoren, die im Folgenden als Objektiv-Reflektor 34, Zwischenreflektor 35 und Tubus-Reflektor 36 bezeichnet werden.

Die Reflektoren 34 bis 36 spannen einen analog zu den oben erläuterten Prinzipien gefalteten Strahlengang mit vier Teilstücken 23 bis 26 auf. Gemäß dem Funktionsprinzip und der Übersichtsdarstellung in der Tabelle (siehe unten) besitzt das Objektiv 21 Freiheitsgrade in allen Raumrichtungen. Der Objektiv-Reflektor 34 ist ebenfalls in allen drei Raumrichtungen verstellbar. Der Zwischen-Reflektor 35 ist in X- und Z-Richtung verstellbar, während der Tubus-Reflektor 36 nur einen Freiheitsgrad in X-Richtung besitzt. Zur Translation des Objektivs 21 in X-Richtung werden alle Komponenten 21, 34, 35 und 36 um gleiche Wegstrecken in X-Richtung bewegt. Dies erfolgt vorzugsweise mit einem gemeinsamen X-Antrieb (nicht dargestellt). Zur Translation in Y-Richtung werden entsprechend die Komponenten 21 und 34 um gleiche Wegstrecken bewegt, was wiederum vorzugsweise mit einem gemeinsamen Y-Antrieb erfolgt. Bei X- und/oder Y-Translationen werden die Längen der Teilstücke 24 und 26 entsprechend verändert. Um diese Veränderungen zu kompensieren und die Gesamtlänge des Strahlenganges konstant zu halten, ist eine Verstellung der Reflektoren 34 und 35 in Z-Richtung vorgesehen. Hierzu besitzt die Verstelleinrichtung einen Z-Antrieb mit einem ersten Teilantrieb zur Fokussierung des Objektivs 21 und einem zweiten Teilantrieb zur gemeinsamen Kompensationsbewegung der Reflektoren 34 und 35. Der zweite Teilantrieb wird so angesteuert, dass bei Translation in X- oder Y-Richtung um eine bestimmte Wegstrecke jeweils eine Verschiebung der Reflektoren 34 und 35 in Z-Richtung entsprechend der halben Wegstrecke erfolgt. Da sich diese Kompensationsbewegung auf den zwei Teilstücken 23 und 25 doppelt auswirkt, wird die entsprechende Translation kompensiert.

Die Figuren 4 und 5 zeigen andere Faltungsvarianten einer erfindungsgemäß verwendeten Umlenkeinrichtung mit drei Reflektoren, die zur Translation des Objektivs 21 und zur Längenkompensation des Strahlengangs eingerichtet sind, wobei die in der Tabelle illustrierten Freiheitsgrade gegeben sind.

| | Fig. 1 | | Fig. 2 | | | Fig. 3 | | | | Fig. 4 | | | | Fig. 5 | | | |
|---|---|---|---|---|---|---|---|---|---|---|---|---|---|---|---|---|---|
| | 21 | 31 | 21 | 32 | 33 | 21 | 34 | 35 | 36 | 21 | 34 | 35 | 36 | 21 | 34 | 35 | 36 |
| X | ■ | ■ | ■ | ■ | ■ | ■ | ■ | ■ | ■ | ■ | ■ | ■ | ■ | ■ | ■ | ■ | ■ |
| Y | | | ■ | ■ | | ■ | ■ | | | ■ | ■ | ■ | | ■ | ■ | | |
| Z | ■ | | ■ | | | ■ | ■ | ■ | | ■ | | | | ■ | ■ | ■ | |

Die Längenkompensation erfolgt gemäß den Figuren 4 und 5 jeweils entsprechend in X-Richtung oder in Z-Richtung. Analog zu den in den Figuren 3 bis 5 dargestellten Prinzipien können auch andere Faltungen des Strahlengangs vom Objektiv 21 zur Tubusoptik 22 vorgenommen werden.

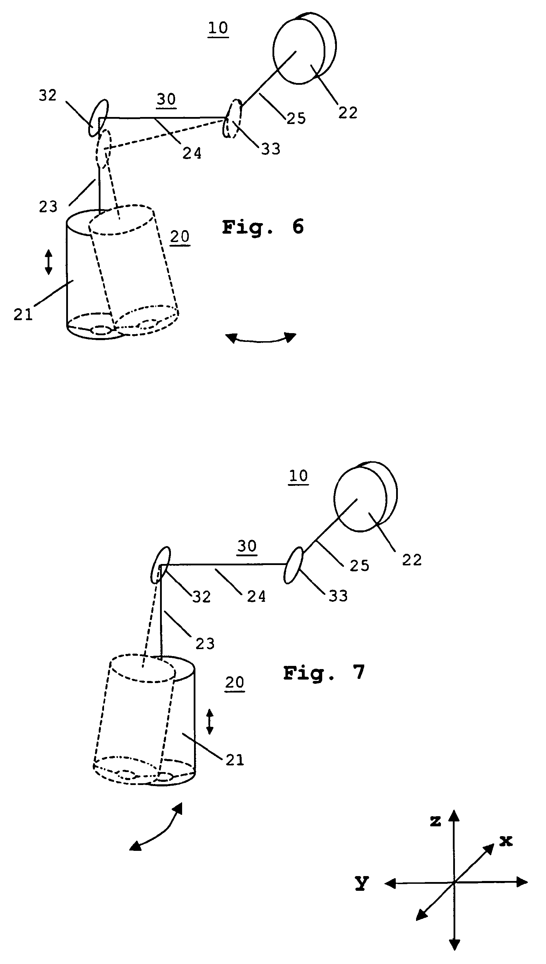

Die Figuren 6 und 7 zeigen ein Verschwenken des Objektivs 21 mit dem Objektiv-Reflektor 32 um mindestens eine Achse senkrecht zur optischen Achse des Objektivs (in der illustrierten Form mit zwei Reflektoren keine Ausführung der Erfindung). Das Verschwenken des Objektivs 21 wird vorzugsweise mit den beschriebenen Translationen kombiniert, kann aber auch allein realisiert werden.

Die optische Achse des zunächst unverschwenkten Objektivs 21 ist vertikal in Z-Richtung ausgerichtet. Die Fokusebene liegt parallel zur X-Y-Ebene. Um die Fokusebene relativ zur X-Y-Ebene zu verkippen, wird das Objektiv 21 mit dem Objektiv-Reflektor 32 verschwenkt. Die Schwenkachse fällt mit der optischen Achse der Abbildungsoptik 20 entlang dem Teilstück 25 (Figur 6) oder entlang dem Teilstück 24 (Figur 7) zusammen. Es können auch beide Schwenkbewegungen kombiniert werden, so dass sich eine effektive Schwenkachse in einer Ebene parallel zur X-Y-Ebene ergibt. Es werden typische Schwenkwinkel im Bereich bis zu 360° für Fig. 6 eingestellt. Die Schwenkbewegung und Einstellung in der verschwenkten Position wird mit mindestens einem Schwenkantrieb durchgeführt (in den Figuren 6 und 7 nicht dargestellt). In jedem Zustand bleiben die rechten Winkel zwischen den Teilstücken 23, 24 und 25 des Strahlengangs erhalten.

In Figur 8 sind die Komponenten der Antriebseinrichtung 40 schematisch am Beispiel der Abbildungseinrichtung gemäß Figur 2 illustriert (in der illustrierten Form mit zwei Reflektoren keine Ausführung der Erfindung). Die Antriebseinrichtung wird zur Realisierung der jeweiligen Translations- und/oder Schwenkbewegungen entsprechend angepasst. Die Antriebseinrichtung 40 umfasst einen X-Antrieb 41, einen Y-Antrieb 42, einen Z-Antrieb 43, einen YZ-Schwenkantrieb 44 und einen XZ-Schwenkantrieb 45.

Zur synchronen Translation und/oder Verschwenkung werden mit dem X-Antrieb 41 neben den optischen Teilen auch die Y-und Z-Antriebe 42, 43 und mit dem Y-Antrieb 41 auch der Z-Antrieb 43 betätigt. Zum Verschwenken ist der X-Antrieb 41 am YZ-Schwenkantrieb 44 und dieser am XZ-Schwenkantrieb 45 (oder umgekehrt) angebracht. Die X-, Y-und Z-Antriebe 41 - 43 sind vorzugsweise Linearstellantriebe, wie z. B. herkömmliche Schubtische. Es werden beispielsweise Schubtische vom Typ Mikromanipulator MP285 (3Z Version, Sutter Instruments) verwendet. Die schematisch illustrierten YZ- und XZ-Schwenkantriebe 44, 45 werden beispielsweise durch Drehtische gebildet, an denen der X-Antrieb über ein Stützrohr befestigt ist.

Der Z-Antrieb 43 umfasst bei den Ausführungsformen gemäß den Figuren 3 bis 5 zwei Teilantriebe, die einerseits zur Fokussierung des Objektivs entlang der optischen Achse und anderseits zur Verschiebung des längenkompensierenden Zweiges des Strahlenganges eingerichtet sind. Sie sind beide auf dem Y-Antrieb 42 befestigt und unabhängig voneinander betätigbar.

In den Figuren 9 und 10 ist illustriert, dass die Umsetzung der Erfindung nicht auf die oben beschriebenen Ausführungsformen mit vertikal ausgerichtetem Objektiv 21 beschränkt ist (in der illustrierten Form mit zwei Reflektoren, keine Ausführung der Erfindung). Das Objekt (Probe) 50 kann auch horizontal beobachtet und das Objektbild zu einer vertikal ausgerichteten Tubusoptik 22 umgelenkt werden. Figur 9 zeigt das Objektiv 21 in einem von der Probe 50 zurückgezogenen Zustand, in dem ein Arbeitsraum für weitere Mess- oder Bearbeitungsschritte geschaffen wird.

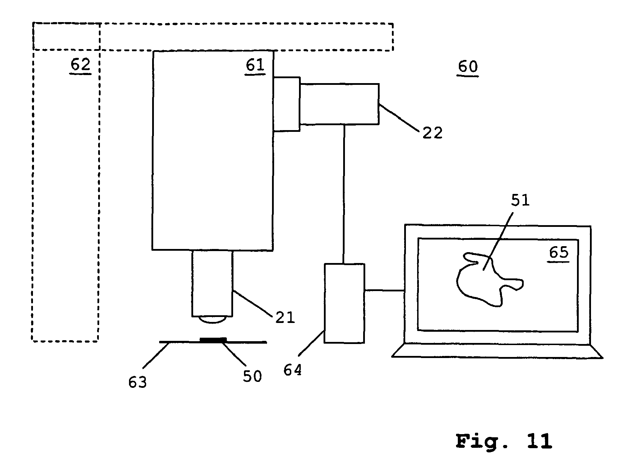

In Figur 11 ist ein erfindungsgemäßes Mikroskop 60 schematisch illustriert, das mit der oben beschriebenen Abbildungseinrichtung ausgestattet ist. Das Mikroskop 60 umfasst insbesondere ein Gehäuse und/oder Träger 61, an dem das Objektiv 21, die Tubusoptik 22 und die Umlenkeinrichtung (nicht dargestellt) angebracht sind, einen Rahmen 62, einen Probenhalter 63, eine Detektoreinrichtung 64 und eine Steuerungs- und Auswertungseinrichtung 65. Die oben beschriebene Verstelleinrichtung ist nicht dargestellt. Sie ist mit dem X-Antrieb oder einem der Schwenkantriebe am Träger 61 oder Rahmen 62 befestigt. Die Gestalt und Position der Detektoreinrichtung 64 sind lediglich schematisch illustriert. Sie umfasst beispielsweise eine Kamera oder einen Abtastmechanismus für die Scanning-Mikroskopie. Die Steuerungs- und Auswertungseinrichtung 65 wird beispielsweise durch einen Personalcomputer mit einem Anzeigeschirm gebildet. Auf dem Anzeigeschirm wird der aktuelle Betriebszustand des Mikroskops und/oder die vergrößerte Abbildung eines Ausschnitts der Probe, wie z. B. eine Zellorganelle 51, angezeigt. Der schematisch illustrierte Probenhalter 63 kann je nach Anwendungsfall für eine ortsfeste Anbringung der Probe 50 oder auch eine zusätzliche Verschiebung mit einem herkömmlichen Probentisch eingerichtet sein.

Das Mikroskop 60 kann des weiteren mit Zusatzeinrichtungen, wie z. B. einem Justierlaser oder Messeinrichtungen ausgestattet sein. Mit dem Justierlaser wird die erfindungsgemäße Abbildungseinrichtung bspw. vor Betriebsbeginn oder nach Verstellschritten ggf. nachjustiert.

## Patentansprüche

1. Abbildungseinrichtung zur mikroskopischen Abbildung eines Objektes (50), mit:
- einem Objektiv (21), das zur Erzeugung eines Objektbildes im Unendlichen eingerichtet ist,
- einer ortsfesten Tubusoptik (22), die zur Erzeugung eines Zwischenbildes vom Objektbild eingerichtet ist, wobei das Objektiv (21) relativ zur Tubusoptik (22) in mindestens einer Bezugsrichtung beweglich angeordnet ist, die von der Ausrichtung der optischen Achse des Objektivs (21) abweicht,
- einer Umlenkeinrichtung (30) mit Reflektoren, die einen verschiebbaren Objektiv-Reflektor (34), einen Tubus-Reflektor (36) und einen verschiebbaren Zwischen-Reflektor (35) umfassen, wobei die Umlenkeinrichtung (30) in jeder Position des Objektivs (21) den Strahlengang vom Objektiv (21) so auf die Tubusoptik (22) richtet, dass er senkrecht auf die Tubusoptik (22) und parallel zu deren optischen Achse verläuft, und
- einer Verstelleinrichtung (40), mit der das Objektiv (21) und der mindestens eine Reflektor (31-35) beweglich sind,
**dadurch gekennzeichnet, dass**
- der Tubus-Reflektor (36) verschiebbar angeordnet ist, und
- der Objektiv-Reflektor (34) und der Zwischen-Reflektor (35) gemeinsam so verschiebbar sind, dass bei einer Verschiebung des Tubus-Reflektors (36) die Länge des Strahlengangs vom Objektiv (21) zur Tubusoptik (22) konstant bleibt.

2. Abbildungseinrichtung gemäß Anspruch 1, bei der die Verstelleinrichtung (40) einen X-Antrieb (41) aufweist, mit dem das Objektiv (21) und der Tubus-Reflektor (36) gemeinsam entlang der optischen Achse der Tubusoptik (22) verschiebbar sind.

3. Abbildungseinrichtung gemäß Anspruch 1 oder 2, bei der die Verstelleinrichtung einen Y-Antrieb (42) aufweist, mit dem das Objektiv (21) und der Objektiv-Reflektor (34) entlang einer Bezugsrichtung senkrecht zur optischen Achse der Tubusoptik (22) verschiebbar sind.

4. Abbildungseinrichtung gemäß Anspruch 2 und 3, bei der der Y-Antrieb (42) mit dem X-Antrieb (41) verschiebbar ist.

5. Abbildungseinrichtung gemäß einem der vorhergehenden Ansprüche, bei der die Verstelleinrichtung (40) einen Z-Antrieb (43) aufweist, mit dem das Objektiv (21) entlang seiner optischen Achse verschiebbar ist.

6. Abbildungseinrichtung gemäß Anspruch 2, 3 und 5, bei der der Z-Antrieb (43) mit dem Y-Antrieb (42) und/oder dem X-Antrieb (41) verschiebbar ist.

7. Abbildungseinrichtung gemäß Anspruch 5 oder 6, bei welcher der Z-Antrieb (43) einen ersten Teilantrieb, mit dem das Objektiv (21) verschiebbar ist, und einen zweiten Teilantrieb aufweist, mit dem die Objektiv- und Zwischen-Reflektoren (34, 35) verschiebbar sind.

8. Abbildungseinrichtung gemäß einem der vorhergehenden Ansprüche, bei der die Verstelleinrichtung mindestens einen Schwenkantrieb (44, 45) aufweist, mit dem das Objektiv (21) und die Reflektoren gemeinsam um die optische Achse der Tubusoptik (22) und/oder um eine Achse verschwenkbar sind, die auf den optischen Achsen des Objektivs (21) und der Tubusoptik (22) senkrecht steht.

9. Abbildungseinrichtung gemäß einem der vorhergehenden Ansprüche, bei der die Tubusoptik (22) Teil eines Okulars zur visuellen Beobachtung des Zwischenbildes, einer Detektoreinrichtung zur Detektion des Zwischenbildes und/oder einer Abtasteinrichtung mit einem Scannerspiegel ist.

10. Mikroskop (60), das mit einer Abbildungseinrichtung (10) gemäß einem der vorhergehenden Ansprüche ausgestattet ist.

11. Verfahren zur mikroskopischen Abbildung eines Objektes (50), bei dem das Objekt mit einem Objektiv (21) auf Unendlichen abgebildet und mit einer Tubusoptik (22) ein Zwischenbild vom Objekt erzeugt wird, wobei
- das Objektiv (21) relativ zur Tubusoptik (22) in mindestens einer Bezugsrichtung bewegt wird, die von der Ausrichtung der optischen Achse des Objektivs (21) abweicht, und
- in jeder Position des Objektivs mit einer Umlenkeinrichtung (30) mit Reflektoren, die einen verschiebbaren Objektiv-Reflektor (34), einen Tubus-Reflektor (36) und einen verschiebbaren Zwischen-Reflektor (35) umfassen, der Strahlengang vom Objektiv (21) so auf die Tubusoptik (22) gerichtet wird, dass die optischen Achsen des Objektivs (21) und der Tubusoptik (22) zusammenfallen,
**dadurch gekennzeichnet, dass**
- der Tubus-Reflektor (36) verschiebbar angeordnet ist, und
- der Objektiv-Reflektor (34) und der Zwischen-Reflektor (35) bei einer Verschiebung des Tubus-Reflektors (36) gemeinsam so verschoben werden, dass bei der Verschiebung des Tubus-Reflektors (36) die Länge des Strahlengangs vom Objektiv (21) zur Tubusoptik (22) konstant bleibt.

## Claims

1. Imaging device for the optical microscopic representation of an object (50), with:
- a lens (21), oriented in such a way as to produce an image of the object to infinity,
- a fixed tubular lens (22) which is oriented in such a way as to produce an intermediate image of the object image, whereby the lens (21) is arranged in such a way that it can be displaced in relation to the tubular lens (22) in at least one reference direction which deviates from the orientation of the optical axis of the lens (21),
- a deviation device (30) with reflectors, comprising an adjustable lens reflector (34), a tubular reflector (36) and an adjustable intermediate reflector (35), whereby the deviation device (30) orients the beam path from the lens (21) towards the tubular lens (22) in each position of the lens (21) in such a way that said beam path extends perpendicularly in relation to the tubular lens (22) and parallel to the optical axis thereof, and
- a displacement device (40), by means of which the lens (21) and at least one reflector (31-35) can be displaced,
**characterised in that**
- the tubular reflector (36) is adjustable, and
- the lens reflector (34) and the intermediate reflector (35) are together adjustable in such a way that when the tubular reflector (36) is moved, the length of the beam path from the lens (21) to the tubular lens (22) remains constant.

2. Imaging device according to Claim 1, in which the displacement device (40) has an X-drive (41) with which the lens (21) and the tubular reflector (36) can be displaced together along the optical axis of the tubular lens (22).

3. Imaging device according to Claim 1 or 2, in which the displacement device (40) has a Y-drive (41) with which the lens (21) and the lens reflector (34) can be displaced along a reference direction perpendicularly in relation to the tubular lens (22).

4. Imaging device according to Claims 2 and 3, in which the Y-drive (42) can be displaced with the X-drive (41).

5. Imaging device according to one of the foregoing Claims, in which the displacement device (40) has a Z-drive (43) with which the lens (21) can be displaced along its optical axis.

6. Imaging device according to Claims 2, 3 and 5, in which the Z-drive (43) can be displaced with the Y-drive (42) and/or the X-drive (41).

7. Imaging device according to Claim 5 or 6, in which the Z-drive (43) has a first partial drive with which the lens (21) can be displaced, and a second partial drive with which the lens reflector and intermediate reflector (34, 35) can be displaced.

8. Imaging device according to one of the foregoing Claims, in which the displacement device has at least one swivel drive (44, 45) with which the lens (21) and the reflectors can be swivelled together around the optical axis of the tubular lens (22) and/or around an axis which is vertical to the optical axis of the lens (21) and of the tubular axis (22).

9. Imaging device according to one of the foregoing claims, in which the tubular lens (22) is part of an eyepiece for the visual observation of the intermediate image, a detection device to detect the intermediate image and/or a scanning device with a scanning mirror.

10. Microscope (60) which is fitted with an imaging device (10) according to one of the foregoing Claims.

11. Procedure for the microscopic imaging of an object (50), in which the object is imaged with a lens (21) to infinity and an intermediate image of the object is created by means of a tubular lens (22), whereby
- the lens (21) is moved in at least one reference direction which deviates from the orientation of the optical axis of the lens (21), and
- in each position of the lens a deviation device (30) with reflectors, comprising an adjustable lens reflector (34), a tubular reflector (36) and an adjustable intermediate reflector (35), orients the beam path from the lens (21) towards the tubular lens (22) in such a way that the optical axes of the lens (21) and the tubular lens (22) coincide,
**characterised in that**
- the tubular reflector (36) is adjustable, and
- the lens reflector (34) and the intermediate reflector (35) are together adjustable in such a way that when the tubular reflector (36) is moved, the length of the beam path from the lens (21) to the tubular lens (22) remains constant.
- a displacement device (40), by means of which the lens (21) and at least one reflector (31-35) can be displaced,

## Revendications

1. Equipement de formation d'images en vue de la formation d'une image microscopique d'un objet (50), ayant :
- un objectif (21), qui est ajusté en vue de la production d'une image de l'objet à l'infini,
- d'une optique à tube installée de manière fixe (22), qui est ajustée en vue de la production d'une image intermédiaire de l'image de l'objet, l'objectif (21) étant disposé d'une façon mobile relativement à l'optique à tube (22) dans au moins une direction de référence, qui dévie de la direction de l'axe optique de l'objectif (21),
- un équipement de changement de direction (30) ayant des réflecteurs, qui comprennent un réflecteur d'objectif décalable (34), un réflecteur à tube (36) et un réflecteur intermédiaire décalable (35), dans lequel l'équipement de changement de direction (30), dans chaque position de l'objectif (21), dirige le trajet optique de l'objectif (21) sur l'optique à tube (22), de telle sorte qu'il se déroule perpendiculairement à l'optique à tube (22) et parallèlement à son axe optique, et
- un équipement de réglage (40), grâce auquel l'objectif (21) et le au moins un réflecteur (31-35) sont mobiles,
**caractérisé en ce que**
- le réflecteur à tube (36) peut être disposé d'une manière décalable, et
- le réflecteur d'objectif (34) et le réflecteur intermédiaire (35) sont décalables conjointement de telle sorte que, lors d'un décalage du réflecteur à tube (36), la longueur du trajet optique de l'objectif (21) à l'optique à tube (22) reste constante.

2. Equipement de formation d'images selon la revendication 1, dans le cas duquel l'équipement de réglage (40) présente un dispositif d'entraînement X (41), grâce auquel l'objectif (21) et le réflecteur à tube (36) sont décalables conjointement le long de l'axe optique de l'optique à tube (22).

3. Equipement de formation d'images selon la revendication 1 ou 2, dans le cas duquel l'équipement de réglage présente un dispositif d'entraînement Y (42), grâce auquel l'objectif (21) et le réflecteur d'objectif (34) sont décalables le long d'une direction de référence perpendiculairement à l'axe optique de l'optique à tube (22).

4. Equipement de formation d'images selon la revendication 2 ou 3, dans le cas duquel le dispositif d'entraînement Y (42) est décalable avec le dispositif d'entraînement X (41).

5. Equipement de formation d'images selon l'une quelconque des revendications précédentes, dans le cas duquel l'équipement de réglage (40) présente un dispositif d'entraînement Z (43), grâce auquel l'objectif (21) est décalable le long de son axe optique.

6. Equipement de formation d'images selon la revendication 2, 3, ou 5, dans le cas duquel le dispositif d'entraînement Z (43) est décalable avec le dispositif d'entraînement Y (42) et/ou avec le dispositif d'entraînement X (41).

7. Equipement de formation d'images selon la revendication 5 ou 6, dans le cas duquel le dispositif d'entraînement Z (43) présente un premier dispositif d'entraînement partiel, grâce auquel l'objectif (21) est décalable, et un deuxième dispositif d'entraînement partiel, grâce auquel le réflecteur d'objectif et le réflecteur intermédiaire (34, 35) sont décalables.

8. Equipement de formation d'images selon l'une quelconque des revendications précédentes, dans le cas duquel l'équipement de réglage présente au moins un dispositif d'entraînement de pivotement (44, 45), grâce auquel l'objectif (21) et les réflecteurs sont pivotables conjointement autour de l'axe optique de l'optique à tube (22) et/ou autour d'un axe qui est perpendiculaire aux axes optiques de l'objectif (21) et de l'optique à tube (22).

9. Equipement de formation d'images selon l'une quelconque des revendications précédentes, dans le cas duquel l'optique à tube (22) fait partie d'un oculaire en vue de l'observation visuelle de l'image intermédiaire, d'un équipement de détecteur en vue de la détection de l'image intermédiaire et/ou d'un équipement de balayage avec un miroir de balayage.

10. Microscope (60), qui est pourvu d'un équipement de formation d'images (10), selon l'une quelconque des revendications précédentes.

11. Procédé en vue de la formation d'image microscopique d'un objet (50), dans le cas duquel l'objet est imagé à l'infini à l'aide d'un objectif (21) et dans le cas duquel une image intermédiaire de l'objet est produite à l'aide d'une optique à tube (22), dans lequel
- l'objectif (21) est déplacé relativement à l'optique à tube (22) dans au moins une direction de référence, qui dévie de la direction de l'axe optique de l'objectif (21), et
- dans chaque position de l'objectif avec un équipement de formation d'images (30) avec des réflecteurs, qui comprennent un réflecteur d'objectif (34) décalable, un réflecteur à tube (36) et un réflecteur intermédiaire (35) décalable, le trajet optique est dirigé de l'objectif (21) sur l'optique à tube (22), de telle sorte que les axes optiques de l'objectif (21) et de l'optique à tube (22) coïncident,
**caractérisé en ce que**
- le réflecteur à tube (36) est disposé d'une manière décalable, et
- le réflecteur d'objectif (34) et le réflecteur intermédiaire (35) sont décalés conjointement lors d'un décalage du réflecteur à tube (36), de telle sorte qu'en cas de décalage du réflecteur à tube (36), la longueur du trajet optique de l'objectif (21) à l'optique à tube (22) reste constante.
